# EUROPÄISCHE PATENTANMELDUNG

(11) **EP 2 495 507 A1**
(43) Veröffentlichungstag der Anmeldung: **05.09.2012**
(21) Anmeldenummer: 11001721.7
(22) Anmeldetag: 02.03.2011
(51) Int. Cl.: F24J 2/52, H01L 31/042

(54) **Befestigungselement für Solarmodulrahmen**

(71) Anmelder: Renusol GmbH, 51063 Köln (DE)
(72) Erfinder: Ring, Tobias, 68163 Mannheim (DE); Ospina, Martin, 12055 Berlin (DE); Kübsch, Michael, 16321 Bernau (DE)
(74) Vertreter: Graf von Stosch, Andreas

(57) **Zusammenfassung**

Das Befestigungselement für Rahmenabschnitte von Solarmodulen umfasst ein auf oder in einer Montageschiene befestigbares Halteelement sowie ein Festklemmteil, das an seiner Oberseite ein wannenförmiges Lager zur Aufnahme eines Nutensteins aufweist, wobei sich das erste Ende des Festklemmteils unmittelbar oder mittelbar auf der Montageschiene abstützt, und wobei das zweite Ende des Festklemmteils dazu ausgebildet ist, den Rahmenabschnitt gegen die Montageschiene zu drücken. Des Weiteren umfasst das Befestigungselement einen Nutenstein, der in dem wannenförmigen Lager beweglich gelagert ist; sowie eine Gewindeschraube, die durch entsprechende Aussparungen im Nutenstein und im wannenförmigen Lager des Festklemmteils hindurch in das Halteelement eingeschraubt ist und eine Verbindung zwischen dem Festklemmteil und dem Halteelement herstellt. Das Festklemmteil ist dazu ausgebildet, beim Festschrauben der Gewindeschraube mit seinem zweiten Ende den Rahmenabschnitt des Solarmoduls gegen die Montageschiene zu drücken und den Rahmenabschnitt auf diese Weise zu befestigen.
Die Anmeldung beschreibt ferner ein Befestigungssystem für Solarmodule, bei dem ein Halteelement in einer Längsaussparung einer Hohlprofilschiene gehalten wird, wobei das Halteelement am Fuß des Halteelements schwenkbar angebrachte Spreizbacken aufweist. Die Spreizbacken sind dazu ausgelegt, in die Längsaussparung der Hohlprofilschiene eingeschoben zu werden. wobei die aufgespreizten Spreizbacken das Halteelement im Inneren der Hohlprofilschiene arretieren, wenn eine Zugkraft auf das Halteelement ausgeübt wird.

## Beschreibung

Die Erfindung betrifft ein Befestigungselement für Rahmenabschnitte von Solarmodulen sowie ein Befestigungssystem für Solarmodule.

Bei der Befestigung von Solarmodulrahmen nebeneinander liegender Solarmodule auf einem Montageprofil werden Klemmstücke oder Klemmscheiben genutzt, die über Verbindungselemente mit dem Montageprofil verschraubt werden und die Rahmen der beiden Solarmodule von oben gegen das Montageprofil pressen.

Am äußeren Rand von mehreren nebeneinander angeordneten Solarmodulen versagt diese Technik jedoch, da nur noch ein Solarmodulrahmen als Auflage für das Klemmstück vorhanden ist. Deshalb werden zusätzlich anstelle des fehlenden Rahmens Distanzhalter oder ähnliche Mittel angeordnet, um für das Klemmstück eine symmetrische Auflage zu erreichen. Da dies nicht nur aufwendig, sondern auch optisch nicht ansprechend ist, erfolgt eine zusätzliche Verblendung, z. B. mittels Einschubwinkeln.

Es ist Aufgabe der Erfindung, ein Befestigungselement zur Verfügung zu stellen, mit dem außen liegende Rahmenabschnitte von Solarmodulen auf einfache und zuverlässige Art festgeklemmt werden können. Darüber hinaus ist es Aufgabe der Erfindung, ein Befestigungssystem für Solarmodule zur Verfügung zu stellen, welches eine einfache und schnelle Handhabung ermöglicht.

Diese Aufgabe wird durch die unabhängigen Ansprüche gelöst. Vorteilhafte Ausführungsformen sind in den Unteransprüchen beschrieben.

Das erfindungsgemäße Befestigungselement für Rahmenabschnitte von Solarmodulen umfasst ein auf oder in einer Montageschiene befestigbares Halteelement sowie ein Festklemmteil, das an seiner Oberseite ein wannenförmiges Lager zur Aufnahme eines Nutensteins aufweist, wobei sich das erste Ende des Festklemmteils unmittelbar oder mittelbar auf der Montageschiene abstützt, und wobei das zweite Ende des Festklemmteils dazu ausgebildet ist, den Rahmenabschnitt gegen die Montageschiene zu drücken. Des Weiteren umfasst das Befestigungselement einen Nutenstein, der in dem wannenförmigen Lager beweglich gelagert ist; sowie eine Gewindeschraube, die durch entsprechende Aussparungen im Nutenstein und im wannenförmigen Lager des Festklemmteils hindurch in das Halteelement eingeschraubt ist und eine Verbindung zwischen dem Festklemmteil und dem Halteelement herstellt. Das Festklemmteil ist dazu ausgebildet, beim Festschrauben der Gewindeschraube mit seinem zweiten Ende den Rahmenabschnitt des Solarmoduls gegen die Montageschiene zu drücken und den Rahmenabschnitt auf diese Weise zu befestigen.

Das erfindungsgemäße Befestigungselement ermöglicht das Festklemmen von außen liegenden Rahmenabschnitten von Solarmodulen. Durch das mit dem Halteelement verschraubte Festklemmteil können unterschiedlich hohe Rahmenabschnitte von Solarmodulen zuverlässig festgeklemmt werden. Dabei wird der jeweilige Rahmenabschnitt beim Festschrauben der Gewindeschraube durch das zweite Ende des Festklemmteils gegen die Montageschiene gedrückt und auf diese Weise zwischen dem zweiten Ende des Festklemmteils und der Montageschiene festgeklemmt. Durch die bewegliche Lagerung des Nutensteins in dem wannenförmigen Lager an der Oberseite des Festklemmteils wird eine Anpassung des Festklemmteils an unterschiedlich hohe Rahmenabschnitte ermöglicht, wobei die Gewindeschraube beim Festschrauben des Festklemmteils stets in senkrechter Position verbleibt. Dadurch wird verhindert, dass die Gewindeschraube beim Festschrauben in der entsprechenden Aussparung im wannenförmigen Lager des Festklemmteils hin- und herrutscht. Durch das erfindungsgemäße Zusammenwirken zwischen dem Festklemmteil, dem beweglich gelagerten Nutenstein im wannenförmigen Lager des Festklemmteils und der Montageschiene können unterschiedlich hohe Rahmenabschnitte von außen liegenden Solarmodulen zuverlässig erfasst und festgeklemmt werden. Dabei ist der bauliche Aufwand und insofern auch der Kostenaufwand für das erfindungsgemäße Befestigungselement relativ niedrig.

Gemäß einer bevorzugten Ausführungsform der Erfindung handelt es sich bei dem Rahmenabschnitt des Solarmoduls um einen außen liegenden Rahmenabschnitt des Solarmoduls.

Gemäß einer bevorzugten Ausführungsform der Erfindung ist das Festklemmteil dazu ausgelegt, Rahmenabschnitte von unterschiedlicher Bauhöhe an der Montageschiene zu befestigen.

Gemäß einer bevorzugten Ausführungsform der Erfindung erfolgt durch den in dem wannenförmigen Lager beweglich gelagerten Nutenstein eine Anpassung an eine jeweilige Neigung des Festklemmteils.

Gemäß einer bevorzugten Ausführungsform der Erfindung sind der Nutenstein und das wannenförmige Lager dazu ausgelegt, die Gewindeschraube unabhängig von einer jeweiligen Neigung des Festklemmteils in einer vordefinierten Position zu halten.

Gemäß einer bevorzugten Ausführungsform der Erfindung ist die Neigung des Festklemmteils in erster Linie durch eine Bauhöhe des zu befestigenden Rahmenabschnitts festgelegt.

Gemäß einer bevorzugten Ausführungsform der Erfindung weist der Nutenstein eine konvex gewölbte Unterseite auf, die auf dem wannenförmigen Lager aufliegt. Gemäß einer bevorzugten Ausführungsform der Erfindung weist das wannenförmige Lager ein Langloch auf, durch das hindurch sich die Schraube erstreckt. Gemäß einer bevorzugten Ausführungsform der Erfindung umfasst das Halteelement eine Gewindemutter oder eine Gewindeplatte, die ein Innengewinde zum Einschrauben der Gewindeschraube bereitstellt. Gemäß einer bevorzugten Ausführungsform der Erfindung ist das Festklemmteil als bogenförmiges Festklemmteil ausgebildet. Gemäß einer bevorzugten Ausführungsform der Erfindung ist die Montageschiene als Profilschiene ausgebildet. Gemäß einer bevorzugten Ausführungsform der Erfindung ist die Montageschiene als Hohlprofilschiene ausgebildet.

Gemäß einer bevorzugten Ausführungsform der Erfindung liegt das zweite Ende des Festklemmteils unmittelbar auf dem Rahmenabschnitt auf.

Gemäß einer bevorzugten Ausführungsform der Erfindung umfasst das Befestigungselement ein Kantenauflageelement, das auf der oberen Kante des Rahmenabschnitts aufliegt und dazu ausgelegt ist, den Rahmenabschnitt gegen die Montageschiene zu drücken.

Gemäß einer bevorzugten Ausführungsform der Erfindung ist das zweite Ende des Festklemmteils mit einem Kantenauflageelement gelenkig verbunden, das auf der oberen Kante des Rahmenabschnitts aufliegt.

Gemäß einer bevorzugten Ausführungsform der Erfindung ist die Montageschiene als Hohlprofilschiene ausgebildet, welche eine Längsaussparung zur Halterung des Halteelements umfasst, wobei das Halteelement dazu ausgelegt ist, in der Längsaussparung der Hohlprofilschiene gehaltert zu werden.

Gemäß einer bevorzugten Ausführungsform der Erfindung umfasst das Befestigungselement eine oder mehrere am Fuß des Halteelements schwenkbar angebrachte Spreizbacken und eine Spreizfeder, wobei die Spreizbacken durch die Spreizfeder derart aufgespreizt werden, dass sie vom Halteelement seitlich abstehen, wobei die Spreizbacken entgegen der Federkraft der Spreizfeder gegen das Halteelement drückbar sind, wobei die Spreizbacken dazu ausgelegt sind, in eine Längsaussparung einer Hohlprofilschiene eingeschoben zu werden, und wobei im Inneren der Hohlprofilschiene die aufgespreizten Spreizbacken das Halteelement arretieren, wenn eine Zugkraft auf das Halteelement ausgeübt wird.

Gemäß einer bevorzugten Ausführungsform der Erfindung werden die Spreizbacken beim Einschieben in die Längsaussparung entgegen der Federkraft der Spreizfeder gegen das Halteelement gedrückt und sind im zusammengedrückten Zustand in die Längsaussparung einschiebbar, wobei sich die Spreizbacken nach Passieren der Längsaussparung der Hohlprofilschiene im Inneren der Hohlprofilschiene infolge der Federkraft der Spreizfeder aufspreizen und vom Halteelement seitlich abstehen, und wobei die aufgespreizten Spreizbacken das Halteelement innerhalb der Hohlprofilschiene arretieren, wenn eine Zugkraft auf das Halteelement ausgeübt wird.

Gemäß einer bevorzugten Ausführungsform der Erfindung sind die Spreizbacken im aufgespreizten Zustand breiter als die Breite der Längsaussparung der Hohlprofilschiene.

Ein erfindungsgemäßes Befestigungssystem für Solarmodule umfasst ein erfindungsgemäßes Befestigungselement wie oben beschrieben sowie eine Montageschiene, auf oder in der das Befestigungselement gehaltert ist.

Ein erfindungsgemäßes Befestigungssystem für Solarmodule umfasst eine Hohlprofilschiene mit einer Längsaussparung sowie ein Befestigungselement mit einem Halteelement, wobei das Halteelement dazu ausgelegt ist, in der Längsaussparung der Hohlprofilschiene gehaltert zu werden. Das Halteelement umfasst eine oder mehrere am Fuß des Halteelements schwenkbar angebrachte Spreizbacken sowie eine Spreizfeder, wobei die Spreizbacken durch die Spreizfeder derart aufgespreizt werden, dass sie vom Halteelement seitlich abstehen, und wobei die Spreizbacken entgegen der Federkraft der Spreizfeder gegen das Halteelement drückbar sind. Die Spreizbacken sind dazu ausgelegt, in die Längsaussparung der Hohlprofilschiene eingeschoben zu werden, wobei die aufgespreizten Spreizbacken das Halteelement im Inneren der Hohlprofilschiene arretieren, wenn eine Zugkraft auf das Halteelement ausgeübt wird.

Das erfindungsgemäße Befestigungssystem für Solarmodule ermöglicht eine vereinfachte Montage der Befestigungselemente in einer hierfür vorgesehenen Hohlprofilschiene durch einfaches Einschieben und Einrasten des mit Spreizbacken versehenen Fußes des Halteelements in die hierfür vorgesehene Längsaussparung der Hohlprofilschiene. Sobald der Fuß des Halteelements in die Längsaussparung der Hohlprofilschiene eingesetzt ist, werden die Spreizbacken im Inneren der Hohlprofilschiene aufgespreizt. Sobald nun eine Zugkraft auf das Halteelement ausgeübt wird, was beim Festklemmen der Rahmen von Solarmodulen notwendigerweise passiert, werden die aufgespreizten Spreizbacken von unten gegen die Längsstege des Hohlprofils gepresst. Dadurch wird das Halteelement an seiner jeweiligen Position innerhalb der Hohlprofilschiene sicher fixiert. Dabei ermöglicht das erfindungsgemäße Einrastprinzip eine deutlich schnellere Montage der Solarmodule.

Gemäß einer bevorzugten Ausführungsform der Erfindung werden die Spreizbacken beim Einschieben in die Längsaussparung entgegen der Federkraft der Spreizfeder gegen das Halteelement gedrückt und sind im zusammengedrückten Zustand in die Längsaussparung einschiebbar, wobei sich die Spreizbacken nach Passieren der Längsaussparung der Hohlprofilschiene im Inneren der Hohlprofilschiene infolge der Federkraft der Spreizfeder aufspreizen und vom Halteelement seitlich abstehen, und wobei die aufgespreizten Spreizbacken das Halteelement innerhalb der Hohlprofilschiene arretieren, wenn eine Zugkraft auf das Halteelement ausgeübt wird.

Gemäß einer bevorzugten Ausführungsform der Erfindung werden im Inneren der Hohlprofilschiene die aufgespreizten Spreizbacken, wenn eine Zugkraft auf das Halteelement ausgeübt wird, von unten gegen seitlich von der Längsaussparung befindliche Längsstege der Hohlprofilschiene gepresst und arretieren das Halteelement in der Hohlprofilschiene.

Gemäß einer bevorzugten Ausführungsform der Erfindung wird beim Befestigen von Rahmenabschnitten von Solarmodulen eine Zugkraft auf das Halteelement ausgeübt, wobei die aufgespreizten Spreizbacken im Inneren der Hohlprofilschiene von unten gegen seitlich von der Längsaussparung befindliche Längsstege der Hohlprofilschiene gepresst werden und das Halteelement in der Hohlprofilschiene arretieren.

Gemäß einer bevorzugten Ausführungsform der Erfindung sind die Spreizbacken im aufgespreizten Zustand breiter als die Breite der Längsaussparung der Hohlprofilschiene.

Gemäß einer bevorzugten Ausführungsform der Erfindung weisen die Spreizbacken an ihrer Oberseite Keilelemente auf, und die Längsstege weisen an ihrer Unterseite komplementär geformte Keilelemente auf.

Gemäß einer bevorzugten Ausführungsform der Erfindung stehen, wenn sich die aufgespreizten Spreizbacken im Inneren der Hohlprofilschiene befinden und eine Zugkraft auf das Halteelement ausgeübt wird, die Keilelemente an der Oberseite der Spreizbacken mit den komplementär geformten Keilelementen an der Unterseite der Längsstege in Eingriff.

Es zeigen:
- Fig. 1: den Aufbau eines erfindungsgemäßen Befestigungselements zum Festklemmen von außen liegenden Rahmenabschnitten von Solarmodulen;
- Fig. 2: ein erfindungsgemäßes Befestigungselement im zusammengebauten Zustand;
- Fig. 3A: ein in einer Montageschiene gehaltertes erfindungsgemäßes Befestigungselement zum Festklemmen eines außen liegenden Rahmenabschnitts eines Solarmoduls;
- Fig. 3B: eine Überblicksdarstellung eines Solarmodulrahmens zusammen mit einem erfindungsgemäßen Befestigungselement und einer Montageschiene;
- Fig. 4: eine Seitenansicht eines erfindungsgemäßen Befestigungselements;
- Fig. 5A: eine Ansicht der Unterseite des erfindungsgemäßen Befestigungselements mit einer Schnittlinie Z-Z;
- Fig. 5B: ein Schnittbild des erfindungsgemäßen Befestigungselements entlang der Schnittebene Z-Z;
- Fig. 5C: eine Draufsicht auf das erfindungsgemäße Befestigungselement;
- Fig. 6: eine Darstellung einer weiteren Ausführungsform eines erfindungsgemäßen Befestigungselements;
- Fig. 7: ein Befestigungselement gemäß der weiteren Ausführungsform der Erfindung, welches in eine Hohlprofilschiene eingesetzt ist;
- Fig. 8A-8E: eine Abfolge von Schritten beim Einsetzen eines Befestigungselements gemäß der weiteren Ausführungsform in eine hierfür vorgesehene Hohlprofilschiene;
- Fig. 9A: eine Draufsicht auf ein erfindungsgemäßes Befestigungselement gemäß der weiteren Ausführungsform, zusammen mit einer Schnittlinie C-C;
- Fig. 9B: ein Schnittbild durch das erfindungsgemäße Befestigungselement gemäß der weiteren Ausführungsform entlang der Schnittebene C-C; und
- Fig. 9C: eine Ausschnittsvergrößerung des in Fig. 9B gezeigten Schnittbilds.

Bei der Befestigung von Solarmodulrahmen nebeneinander liegender Solarmodule auf einem Montageprofil werden Klemmstücke oder Klemmscheiben genutzt, die über Verbindungselement mit dem Montageprofil verschraubt werden und die Rahmen der beiden Solarmodule von oben gegen das Montageprofil pressen.

Am äußeren Rand von mehreren nebeneinander angeordneten Solarmodulen versagt diese Technik jedoch, da nur noch ein Solarmodulrahmen als Auflage für das Klemmstück vorhanden ist. Deshalb werden zusätzlich anstelle des fehlenden Rahmens Distanzhalter oder ähnliche Mittel angeordnet, um für das Klemmstück eine symmetrische Auflage zu erreichen. Da dies nicht nur aufwendig, sondern auch optisch nicht ansprechend ist, erfolgt eine zusätzliche Verblendung, z. B. mittels Einschubwinkeln.

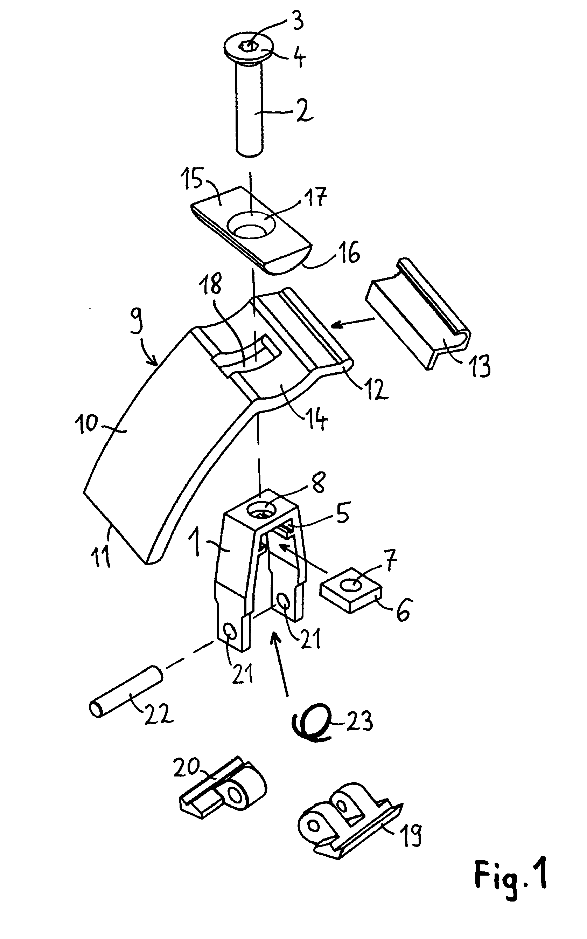

Bei der erfindungsgemäßen Lösung werden die außenseitigen Rahmen von Solarmodulen mittels eines Befestigungselements an dem jeweiligen Montageprofil befestigt, wobei das Befestigungselement spezifisch für die asymmetrische Befestigung von außen liegenden Rahmen von Solarmodulen ausgelegt ist. Das erfindungsgemäße Befestigungselement wird im Folgenden anhand der Fig. 1 bis Fig. 5C im Einzelnen beschrieben werden.

In Fig. 1 sind zunächst die Bestandteile des erfindungsgemäßen Befestigungselements im Überblick gezeigt. Das Befestigungselement umfasst ein Halteelement 1, das in einer Montageschiene befestigt werden kann. Das Halteelement 1 stellt ein Innengewinde für eine Gewindeschraube 2 zur Verfügung. Die Gewindeschraube 2 wird mittels eines Innensechskants 3 eingeschraubt, der sich im Senkkopf 4 befindet. Das Halteelement 1 umfasst eine Aufnahme 5 für eine Gewindeplatte oder eine Mutter. Bei der in Fig. 1 gezeigten Ausführungsform wird in die Aufnahme 5 eine Gewindeplatte 6 eingeschoben, die mit einem Innengewinde 7 ausgestattet ist. Die Gewindeschraube 2 kann von oben durch die Aussparung 8 des Halteelements 1 hindurch in das Innengewinde 7 eingeschraubt werden.

Mit Hilfe der Gewindeschraube 2 wird ein Festklemmteil 9 am Halteelement 1 befestigt. Das Festklemmteil 9 dient zum Festklemmen des Rahmens eines außen liegenden Solarmoduls. Das Festklemmteil 9 umfasst einen bogenförmigen Abschnitt 10 und ein erstes Ende 11. Mit dem ersten Ende 11 stützt sich das Festklemmteil 9 auf der Montageschiene ab. Das Festklemmteil 9 umfasst darüber hinaus ein zweites Ende 12, das dazu ausgebildet ist, den Rahmen des Solarmoduls von oben gegen die Montageschiene zu pressen und den Rahmen auf diese Weise zu fixieren. Um den Druck gleichmäßig auf den Rahmen zu übertragen, kann ein Kantenauflageelement 13 vorgesehen sein, das auf der Kante des festzuklemmenden Rahmens aufliegt. Das Kantenauflageelement 13 ist mit dem zweiten Ende 12 des Festklemmteils 9 gelenkig verbunden. Durch diese gelenkige Verbindung zwischen dem Kantenauflageelement 13 und dem zweiten Ende 12 des Festklemmteils 9 wird erreicht, dass das Kantenauflageelement 13 auf dem festzuklemmenden Rahmen unabhängig von dessen Bauhöhe optimal aufliegt.

Auf der Oberseite des Festklemmteils 9 ist zwischen dem bogenförmigen Abschnitt 10 und dem zweiten Ende 12 ein wannenförmiges Lager 14 angeordnet, das dazu ausgebildet ist, einen Nutenstein 15 beweglich zu lagern. Der Nutenstein 15 weist eine konvex gewölbte Unterseite 16 auf, deren Form in etwa der Form des wannenförmigen Lagers 14 entspricht, so dass der Nutenstein 15 in dem wannenförmigen Lager 14 verschwenkbar gelagert ist. Der Nutenstein 15 weist eine Aussparung 17 für die Gewindeschraube 2 auf. Auch das Festklemmteil 9 weist ein Langloch 18 für die Gewindeschraube 2 auf. Die Gewindeschraube 2 wird durch die Aussparung 17, das Langloch 18 und die Aussparung 8 in das Innengewinde 7 der Gewindeplatte 6 eingeschraubt. Dabei ist das Langloch 18 so dimensioniert, dass das Festklemmteil 9 innerhalb vorgegebener Grenzen verschwenkbar ist. Dadurch wird eine Anpassung an unterschiedliche Rahmenhöhen von Solarmodulen ermöglicht.

Zur Halterung des Befestigungselements in einer Montageschiene sind bei der in Fig. 1 gezeigten Ausführungsform zwei Spreizbacken 19, 20 vorgesehen, die am Fuß des Halteelements 1 schwenkbar angebracht sind. Hierzu weist das Halteelement 1 zwei Bohrungen 21 für einen Bolzen 22 auf. Mit Hilfe des Bolzens 22 werden die beiden Spreizbacken 19, 20 schwenkbar gelagert. Der Bolzen 22 erstreckt sich durch die Bohrungen 21, die erste Spreizbacke 19 , die zweite Spreizbacke 20 und eine Spreizfeder 23 hindurch. Die erste Spreizbacke 19 und die zweite Spreizbacke 20 werden durch die Spreizfeder 23 derart aufgespreizt, dass sie vom Halteelement 1 seitlich abstehen. Dabei können die beiden Spreizbacken 19, 20 entgegen der Federkraft der Spreizfeder 23 gegen das Halteelement 1 gedrückt werden. Im zusammengedrückten Zustand können die beiden Spreizbacken 19, 20 in die Montageschiene eingeschoben werden, um das Befestigungselement auf diese Weise in der Montageschiene einzurasten und zu haltern. Es wird jedoch hervorgehoben, dass die in Fig. 1 gezeigte Ausführungsform mit den beiden Spreizbacken 19, 20 lediglich eine von vielen möglichen Varianten darstellt, um das Halteelement 1 in einer Montageschiene zu fixieren. Insofern gibt es alternativ zu der in Fig. 1 dargestellten Variante zahlreiche andere Möglichkeiten des Verschraubens, Verklemmens etc., um das Halteelement 1 in einer Trägerschiene zu haltern und zu fixieren.

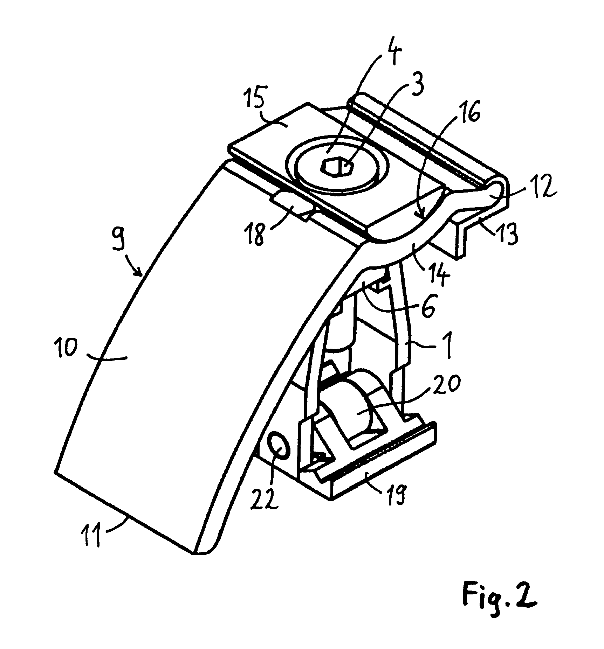

In Fig. 2 ist das Befestigungselement im zusammengebauten Zustand gezeigt. Zu erkennen ist das Halteelement 1 sowie die erste Spreizbacke 19, ein Teil der zweiten Spreizbacke 20 sowie die Stirnfläche des Bolzens 22. Die erste Spreizbacke 19 steht infolge der Federkraft der Spreizfeder 23 seitlich vom Halteelement 1 ab. Zu erkennen ist weiterhin der Nutenstein 15, dessen konvex gewölbte Unterseite 16 auf dem entsprechend geformten wannenförmigen Lager 14 des Festklemmteils 9 aufliegt. Der Nutenstein 15 und das Festklemmteil 9 sind mittels der Gewindeschraube 2 am Halteelement 1 befestigt. Dabei erstreckt sich die Gewindeschraube 2 durch die Aussparung 17 des Nutensteins 15 und das Langloch 18 hindurch und ist mit der Gewindeplatte 6 verschraubt. Zum Festschrauben der Gewindeschraube 2 ist ein Innensechskant 3 im Senkkopf 4 der Gewindeschraube 2 vorgesehen. Das Festklemmteil 9 weist einen bogenförmigen Abschnitt 10 auf. Dieser bogenförmige Abschnitt 10 des Festklemmteils 9 ist so ausgebildet, dass sich das Festklemmteil mit seinem ersten Ende 11 auf der zur Halterung des Befestigungselements vorgesehenen Montageschiene abstützt. Das zweite Ende 12 des Festklemmteils 9 stellt eine gelenkige Verbindung zu dem Kantenauflageelement 13 her. Das Kantenauflageelement 13 ist dazu ausgebildet, auf der oberen Kante des festzuklemmenden Solarmodulrahmens aufzuliegen und den Anpressdruck, der beim Festschrauben der Gewindeschraube 2 entsteht, gleichmäßig auf den Rahmen zu übertragen. Dabei ermöglicht die gelenkige Verbindung zwischen dem Kantenauflageelement 13 und dem Festklemmteil 9 eine Anpassung an die jeweilige Neigung des Festklemmteils 9. Dies ermöglicht eine Anpassung an unterschiedliche Rahmenhöhen des zu fixierenden Solarmoduls.

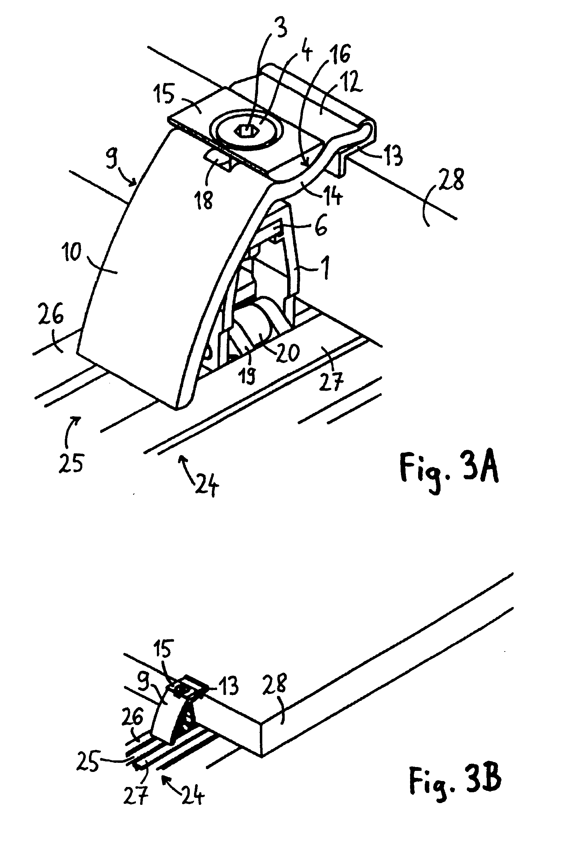

In den Fig. 3A und 3B ist gezeigt, wie das erfindungsgemäße Befestigungselement in eine Montageschiene 24 eingesetzt wird. Die Montageschiene 24 ist dabei als Hohlprofilschiene ausgebildet und weist an ihrer Oberseite eine Längsaussparung 25 auf, in die das Befestigungselement eingesetzt wird. Die Längsaussparung 25 wird an ihren Längsseiten von einem ersten Längssteg 26 und einem zweiten Längssteg 27 begrenzt. Zum Einsetzen des Befestigungselements in die Hohlprofilschiene werden die beiden Spreizbacken 19, 20 entgegen der Federkraft gegen das Halteelement 1 gedrückt. Im zusammengedrückten Zustand kann der Fuß des Halteelements 1 mit den zusammengedrückten Spreizbacken 19, 20 in die Längsaussparung 25 der Hohlprofilschiene eingeschoben werden. Im Inneren der Hohlprofilschiene werden die Spreizbacken 19, 20 infolge der Federkraft der Spreizfeder 23 wieder aufgespreizt und arretieren den Fuß des Halteelements 1. In Fig. 3A ist außerdem der Rahmen 28 des Solarmoduls mit eingezeichnet, der auf der Montageschiene 24 aufliegt. Der Rahmen 28 wird durch das Festklemmteil 9 und das Kantenauflageelement 13 gegen die Montageschiene 24 gedrückt und durch Anziehen der Gewindeschraube 2 festgeklemmt. Dabei liegt das Kantenauflageelement 13 auf der oberen Kante des Rahmens 28 auf. Das Festklemmteil 9 liegt mit seinem ersten Ende 11 auf den beiden Längsstegen 26, 27 der Montageschiene 24 auf.

Beim Einschrauben der Gewindeschraube 2 wird der Nutenstein 15 zum Halteelement 1 hin bewegt, wobei die konvex gewölbte Unterseite 16 des Nutensteins 15 auf dem wannenförmigen Lager 14 des Festklemmteils 9 aufliegt. Beim Einschrauben der Gewindeschraube 2 bewegt sich das zweite Ende 12 des Festklemmteils 9 auf den Rahmen 28 des Solarmoduls zu, wobei das Festklemmteil 9 immer stärker geneigt wird. Mit zunehmender Neigung des Festklemmteils 9 bewegt sich das erste Ende 11 des Festklemmteils 9 entlang den beiden Längsstegen 26, 27 langsam nach vorn, und außerdem passt sich die Lage des Nutensteins 15 innerhalb des wannenförmigen Lagers 14 an die zunehmende Neigung des Festklemmteils 9 an. Beim Festschrauben der Gewindeschraube 2 wird durch das zweite Ende 12 des Festklemmteils 9 eine nach unten gerichtete Kraft auf das Kantenauflageelement 13 und den Rahmen 28 des Solarmoduls ausgeübt. Dadurch wird beim Festschrauben der Gewindeschraube 2 der Rahmen 28 zwischen dem Kantenauflageelement 13 und der Montageschiene 24 festgeklemmt. Dadurch ist eine sichere Montage der Rahmen von außen liegenden Solarmodulen möglich.

In Fig. 3B ist nochmals im Überblick dargestellt, wie der Rahmen 28 eines außen liegenden Solarmoduls mittels des erfindungsgemäßen Befestigungselements festgeklemmt werden kann. Das Halteelement 1 wird in die Längsaussparung 25 einer Montageschiene 24 eingerastet, so dass das erste Ende 11 des Festklemmteils 9 auf den Längsstegen 26, 27 aufliegt, während das zweite Ende 12 des Festklemmteils 9 das Kantenauflageelement 13 von oben gegen den Rahmen 28 drückt. Beim Festziehen der Gewindeschraube 2 presst der Nutenstein 15 das Festklemmteil 9 so gegen das Kantenauflageelement 13 und den Rahmen 28, dass der Rahmen 28 zwischen dem Festklemmteil 9 und der Montageschiene 24 festgeklemmt wird.

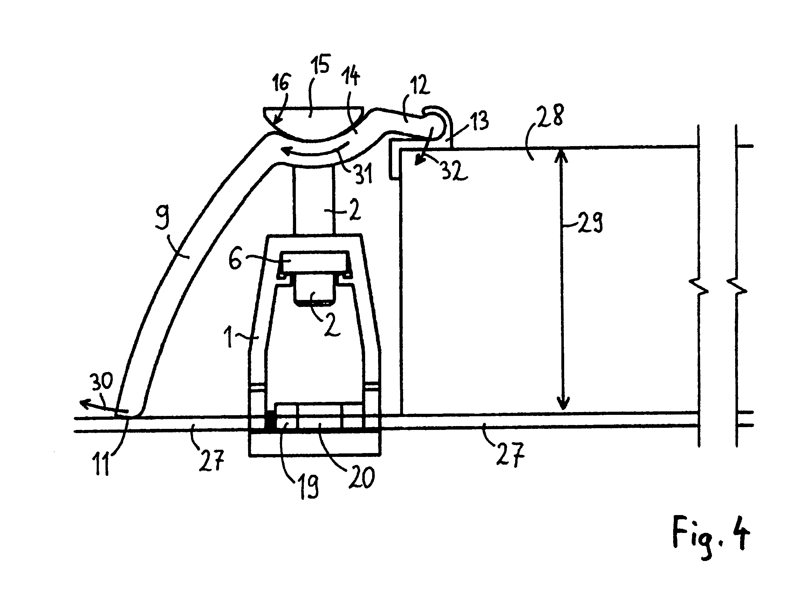

Fig. 4 zeigt eine Seitenansicht des erfindungsgemäßen Befestigungselements. Anhand von Fig. 4 soll im Folgenden erläutert werden, wie das erfindungsgemäße Befestigungselement zum Festklemmen von Solarmodulrahmen mit unterschiedlicher Bauhöhe eingesetzt werden kann. Wie bereits beschrieben, wird das Halteelement 1 mittels der beiden Spreizbacken 19, 20 in einer Montageschiene verankert. Das Festklemmteil 9 liegt mit seinem ersten Ende 11 auf den Längsstegen 26, 27 der Montageschiene 24 auf, während das zweite Ende 12 des Festklemmteils 9 gelenkig mit dem Kantenauflageelement 13 verbunden ist, das auf der oberen Kante des Rahmens 28 aufliegt. Der Nutenstein 15 liegt mit seiner konvex gewölbten Unterseite 16 auf dem entsprechend geformten wannenförmigen Lager 14 auf, wobei der Nutenstein 15 und das Festklemmteil 9 mittels der Gewindeschraube 2 mit dem Halteelement 1 verschraubt sind. Beim Festschrauben der Gewindeschraube 2 wird der Nutenstein 15 in Richtung zum Halteelement 1 hin bewegt und übt eine Anpresskraft auf das Festklemmteil 9 aus, so dass das Kantenauflageelement 13 durch das zweite Ende 11 des Festklemmteils 9 von oben gegen den Rahmen 28 gedrückt wird. Auf diese Weise wird der Rahmen 28 des Solarmoduls zwischen dem Kantenauflageelement 13 und den Längsstegen 26, 27 der Montageschiene 24 festgeklemmt.

Anhand von Fig. 4 kann erkannt werden, auf welche Weise sich das Festklemmteil 9 an unterschiedliche Bauhöhen der Rahmen von Solarmodulen anpassen kann. Die typische Höhe von Modulrahmen bewegt sich im Bereich von etwa 30 bis 50 mm. Bei dem erfindungsgemäßen Befestigungselement erfolgt die Anpassung an die jeweilige Höhe 29 des Modulrahmens 28 über die Neigung des Festklemmteils 9. Zum Festklemmen eines vergleichsweise hohen Rahmens ist das Festklemmteil 9 nur relativ schwach geneigt. Dagegen ist das Festklemmteil 9 beim Festklemmen eines Rahmens von relativ geringer Bauhöhe relativ stark geneigt. Beim Festklemmen eines Rahmens von geringer Bauhöhe wird die Gewindeschraube 2 weiter in die Gewindeplatte 6 des Halteelements 1 eingeschraubt, und der Nutenstein 15 bewegt sich daher in Richtung auf das Halteelement 1 zu. Das Festklemmteil 9 wird dadurch in eine stärker geneigte Position überführt. Dabei bewegt sich das erste Ende 11 des Festklemmteils 9, das auf den Längsstegen 26, 27 der Montageschiene 24 aufliegt, entlang den Längsstegen 26, 27 nach außen, wie dies durch den Pfeil 30 veranschaulicht ist. Darüber hinaus gleitet beim Einschrauben der Gewindeschraube 2 das wannenförmige Lager 14 entlang der konvex gewölbten Unterseite 16 des

Nutensteins 15. Die relative Beweglichkeit zwischen dem Nutenstein 15 und dem wannenförmigen Lager 14 ermöglicht eine Anpassung an unterschiedliche Neigungen des Festklemmteils 9. Das wannenförmige Lager 14 kann zur Anpassung an unterschiedliche Neigungen des Festklemmteils 9 an der entsprechend gewölbten Unterseite 16 des Nutensteins 15 entlang gleiten, so dass auch bei unterschiedlichen Neigungen des Festklemmteils 9 eine Fixierung des Festklemmteils 9 durch die stets senkrecht zur Montageschiene 24 angeordnete Gewindeschraube 2 erfolgen kann. Durch das Zusammenwirken zwischen dem im Wesentlichen halbrunden Nutenstein 15 und dem entsprechend gewölbten wannenförmigen Lager 14 wird eine bewegliche Lagerung des Nutensteins 15 dergestalt ermöglicht, dass die konvex gewölbte Unterseite 16 des Nutensteins 15 entlang der entsprechenden Wölbung des wannenförmigen Lagers 14 gleiten kann, bis eine für die jeweilige Neigung des Festklemmteils 9 optimale Position erreicht ist. Dieses Entlanggleiten des wannenförmigen Lagers 14 an der Unterseite 16 des Nutensteins 15 ist in Fig. 4 durch den Pfeil 31 veranschaulicht. Diese relative Beweglichkeit zwischen dem wannenförmigen Lager 14 und dem Nutenstein 15 ermöglicht es, das Festklemmteil 9 in unterschiedlich geneigten Positionen durch die stets senkrecht zur Montageschiene 24 verlaufende Gewindeschraube 2 festzuschrauben. Die metrische Schraube wird immer in senkrechter Position gehalten und verrutscht nicht im Langloch 18 des Festklemmteils 9.

Wenn das Festklemmteil 9 in eine stärker geneigte Position gebracht wird, bewegt sich darüber hinaus das zweite Ende 12 des Festklemmteils 9 auf den Rahmen 28 zu, wie dies durch den Pfeil 32 in Fig. 4 veranschaulicht ist. Dadurch kommt es zu einer Bewegung des zweiten Endes 12 relativ zum Kantenauflageelement 13. Durch die schwenkbare Verbindung zwischen dem zweiten Ende 12 des Festklemmteils 9 und dem Kantenauflageelement 13 ist gewährleistet, dass das Kantenauflageelement 13 stets plan auf dem zu fixierenden Rahmen 28 aufliegt. Die vom zweiten Ende 12 des Festklemmteils 9 ausgeübte Feststellkraft wird auch bei unterschiedlichen Neigungen des Festklemmteils 9 gleichmäßig auf den Rahmen 28 übertragen, damit der Rahmen 28 optimal zwischen dem Kantenauflageelement 13 und den Längsstegen 26, 27 der Montageschiene 24 eingespannt wird. Mittels des Kantenauflageelements 13 wird bei der Klemmung ein vertikaler und genau platzierter Druck erzielt.

Zusammenfassend lässt sich sagen, dass mittels des erfindungsgemäßen Befestigungselements ein Festklemmen von unterschiedlich hohen Rahmen dadurch ermöglicht wird, dass zum Ersten das erste Ende des Festklemmteils auf den Längsstegen entlang gleiten kann, dass zum Zweiten eine relative Verschieblichkeit zwischen der Unterseite des Nutensteins und der wannenförmigen Aufnahme gegeben ist, und dass zum Dritten mittels einer schwenkbaren Verbindung zwischen dem zweiten Ende des Festklemmteils und dem Kantenauflageelement dafür gesorgt wird, dass das Kantenauflageelement den jeweiligen Rahmen sicher erfasst.

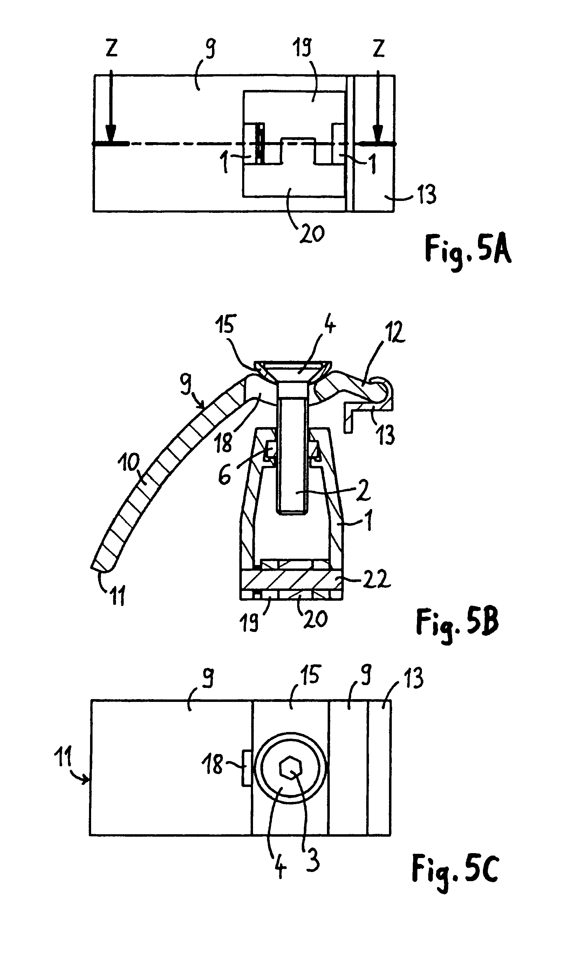

In den Fig. 5A bis 5C sind Ansichten des erfindungsgemäßen Befestigungselements aus unterschiedlichen Richtungen gezeigt. Fig. 5A zeigt eine Ansicht des erfindungsgemäßen Befestigungselements von unten. In dieser Darstellung sind insbesondere die erste Spreizbacke 19, die zweite Spreizbacke 20 sowie Teile des Halteelements 1 zu erkennen. Darüber hinaus erkennt man insbesondere den bogenförmigen Abschnitt 10 des Festklemmteils 9 von unten sowie das Kantenauflageelement 13 von unten. In Fig. 5A ist eine Schnittlinie Z-Z eingezeichnet, wobei in Fig. 5B das zugehörige Schnittbild zu dieser Schnittebene Z-Z gezeigt ist.

In Fig. 5B ist das angeschnittene Halteelement 1 mit der in die entsprechende Aufnahme 5 eingeschobenen Gewindeplatte 6 zu erkennen. Der Bolzen 22, der zur schwenkbaren Lagerung der Spreizbacken 19, 20 dient, ist in der Mitte durchgeschnitten. Des Weiteren sind der bogenförmige Abschnitt 10 des Festklemmteils 9, das erste Ende 11 des Festklemmteils 9 sowie das zweite Ende 12 des Festklemmteils 9 zu erkennen, wobei das zweite Ende 12 mit dem Kantenauflageelement 13 in Eingriff steht. Der Nutenstein 15 liegt mit seiner konvex gewölbten Unterseite 16 auf dem entsprechend geformten wannenförmigen Lager 14 auf. Die Gewindeschraube 2 erstreckt sich durch den Nutenstein 15 und das Langloch 18 in dem Festklemmteil 9 hindurch und ist in die Gewindeplatte 6 des Halteelements 1 eingeschraubt.

In Fig. 5C ist das erfindungsgemäße Befestigungselement von oben gezeigt. Dabei ist zum einen der Nutenstein 15 zu erkennen, zum anderen sind Teile des Festklemmteils 9 sowie des Kantenauflageelements 13 zu sehen. Zu erkennen sind außerdem der Innensechskant 3 und der Senkkopf 4 der Gewindeschraube 2 sowie ein Teil des Langlochs 18, durch das hindurch die Gewindeschraube 2 verläuft.

Bei der bisher in den Fig. 1 bis 5C gezeigten Ausführungsform der Erfindung handelt es sich um ein Befestigungselement für außen liegende Rahmenabschnitte von Solarmodulen, mit dem jeweils ein am Rand einer Solarmodulanordnung befindlicher Rahmenabschnitt festgeklemmt werden kann. Dabei ist in Fig. 1 bereits ein Einrastmechanismus zu erkennen gewesen, der zwei schwenkbar am Fuß des Halteelements 1 angeordnete Spreizbacken 19, 20 zum Einrasten des Befestigungselements in eine Montageschiene umfasst. Dieser Einrastmechanismus soll im Folgenden näher beschrieben werden. Der Einsatz dieses Einrastmechanismus ist dabei nicht auf die in den Fig. 1 bis 5C gezeigte Ausführungsform für außen liegende Rahmenabschnitte beschränkt, sondern kann darüber hinaus auch für solche Befestigungselemente eingesetzt werden, die im Inneren einer Solarmodulanordnung zwei benachbarte aneinandergrenzende Solarmodule gemeinsam festklemmen.

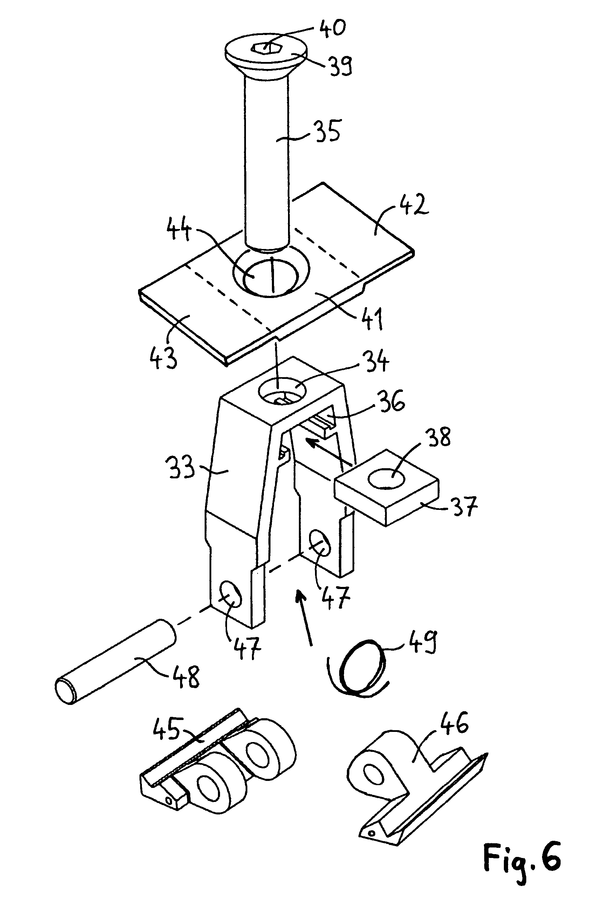

Ein derartiges Befestigungselement zum Festklemmen der Rahmenabschnitte von zwei unmittelbar aneinander angrenzenden Solarmodulen ist in Fig. 6 gezeigt. Das in dieser Ausführungsform gezeigte Befestigungselement umfasst ein Halteelement 33, in das von oben durch die Aussparung 34 hindurch eine Gewindeschraube 35 eingeschraubt werden kann. Hierzu umfasst das Halteelement 33 eine Aufnahme 36, in die eine Gewindeplatte 37 von der Seite her eingeschoben werden kann. Dabei weist die Gewindeplatte 37 ein Innengewinde 38 auf, in das die Gewindeschraube 35 durch die Aussparung 34 hindurch eingeschraubt werden kann. In der in Fig. 6 gezeigten Ausführungsform umfasst die Gewindeschraube 35 einen Senkkopf 39 mit einem Innensechskant 40. Die Gewindeschraube 35 dient dazu, die Festklemmplatte 41 am Halteelement 33 festzuschrauben. Die Festklemmplatte 41 ist zum Festklemmen der beiden nebeneinander angeordneten Rahmen der beiden benachbarten Solarmodule ausgebildet. Ein erster Abschnitt 42 der Festklemmplatte 41 ist zum Festklemmen des Rahmens eines ersten Solarmoduls ausgebildet, während ein zweiter Abschnitt 43 der Festklemmplatte 41 zum Festklemmen des Rahmens eines zweiten Solarmoduls ausgebildet ist. Die Festklemmplatte 41 weist eine in der Mitte angeordnete Aussparung 44 für die Gewindeschraube 35 auf. Zum Festklemmen der Rahmen von beiden Solarmodulen wird die Festklemmplatte 41 so auf die beiden festzuklemmenden Rahmenabschnitte der beiden Solarmodule gelegt, dass der erste Abschnitt 42 auf dem Rahmen des ersten Solarmoduls aufliegt, während der zweite Abschnitt 43 auf dem Rahmen des zweiten Solarmoduls aufliegt. Anschließend wird die Gewindeschraube 35 durch die Aussparung 44 und die Aussparung 34 hindurch in das Innengewinde 38 der Gewindeplatte 37 eingeschraubt. Durch Festziehen der Gewindeschraube 35 wird die Festklemmplatte 41 gegen die festzuklemmenden Rahmenabschnitte gedrückt, welche dadurch fixiert werden.

Zur Verankerung des Halteelements 33 in einer Montageschiene sind zwei Spreizbacken 45, 46 vorgesehen, die am Fuß des Halteelements 33 schwenkbar angebracht sind. Hierzu sind im unteren Teil des Halteelements 33 zwei Bohrungen 47 für einen Bolzen 48 vorgesehen. Der Bolzen 48 erstreckt sich durch die Bohrungen 47, durch die erste Spreizbacke 45, die zweite Spreizbacke 46 und eine Spreizfeder 49 hindurch. Auf diese Weise werden die erste Spreizbacke 45 und die zweite Spreizbacke 46 mittels des Bolzens 48 schwenkbar gelagert. Die Spreizfeder 49 drückt die beiden Spreizbacken 45, 46 vom Halteelement 33 weg, so dass die beiden Spreizbacken 45, 46 seitlich vom Halteelement 33 abstehen. Die beiden Spreizbacken 45, 46 können entgegen der Federkraft der Spreizfeder 49 zusammengedrückt werden. Im zusammengedrückten Zustand kann der Fuß des Halteelements 33 in eine entsprechende Aussparung einer Montageschiene eingeschoben und eingerastet werden.

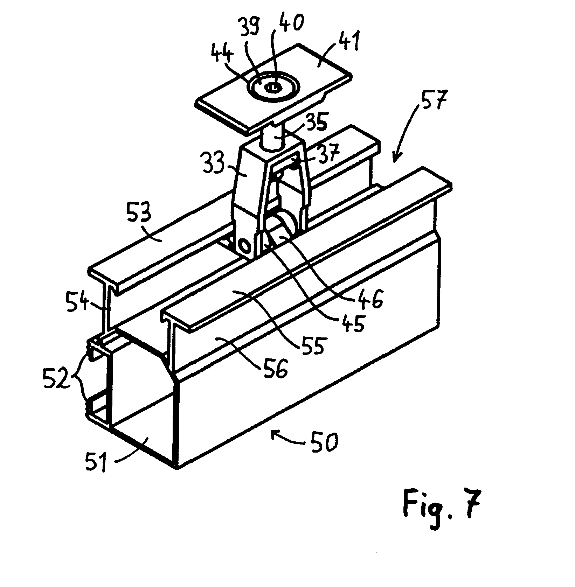

In Fig. 7 ist gezeigt, wie das erfindungsgemäße Befestigungselement in einer Hohlprofilschiene gehaltert werden kann. Die Hohlprofilschiene 50 umfasst ein Trägerprofil 51 mit seitlichen Anschlüssen 52 für die Dachbefestigung der Solarmodulanordnung. Des Weiteren umfasst die Hohlprofilschiene 50 einen ersten Längssteg 53, der über eine erste Seitenwand 54 mit dem Trägerprofil 51 verbunden ist, sowie einen zweiten Längssteg 55, der über eine zweite Seitenwand 56 mit dem Trägerprofil 51 verbunden ist. Der erste Längssteg 53 und der zweite Längssteg 55 begrenzen eine Längsaussparung 57, in die das erfindungsgemäße Befestigungselement eingerastet wird. Von dem Befestigungselement sind in Fig. 7 die Festklemmplatte 41, der Senkkopf 39 und der Innensechskant 40, das Halteelement 33 mit der Gewindeplatte 37 sowie Teile der beiden Spreizbacken 45, 46 zu erkennen. Anhand von Fig. 7 ist auch zu erkennen, wie durch Festschrauben der Festklemmplatte 41 zwei Rahmenabschnitte von benachbarten Solarmodulen zwischen der Festklemmplatte 41 und den Längsstegen 53, 55 der Hohlprofilschiene 50 festgeklemmt werden können.

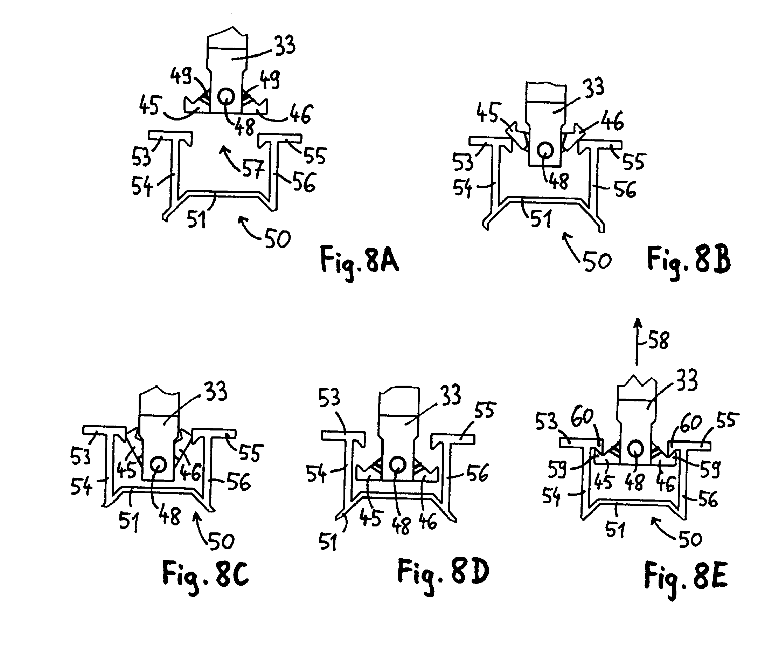

In den Fig. 8A bis 8E ist gezeigt, wie das erfindungsgemäße Befestigungselement in die Hohlprofilschiene 50 eingerastet wird. Von der Hohlprofilschiene sind in den Fig. 8A bis 8E jeweils der erste Längssteg 53, der zweiten Längssteg 55, die erste Seitenwand 54, die zweite Seitenwand 56 sowie ein Teil des Trägerprofils 51 zu erkennen. Die beiden Längsstege 53, 55 begrenzen die Aussparung 57, in die das Befestigungselement eingesetzt werden soll. Von dem Befestigungselement sind der untere Teil des Halteelements 33, die erste Spreizbacke 45, die zweite Spreizbacke 46 sowie die Stirnfläche des Bolzens 48 zu erkennen. Außerdem sind die Enden der Spreizfeder 49 zu erkennen. Die beiden Spreizbacken 45, 46 werden durch die Federkraft der Spreizfeder 49 dergestalt aufgespreizt, dass sie seitlich vom Halteelement 33 abstehen. Im aufgespreizten Zustand sind die Spreizbacken 45, 46 breiter als die Längsaussparung 57 der Hohlprofilschiene 50.

In den Fig. 8B und 8C ist gezeigt, wie das erfindungsgemäße Befestigungselement durch die Aussparung 57 in das Innere der Hohlprofilschiene 50 geschoben werden kann. Wenn das Halteelement 33 mit den abgespreizten Spreizbacken 45, 46 gegen die Längsstege 53, 55 der Hohlprofilschiene 50 gedrückt wird, dann übt der erste Längssteg 53 eine Kraft auf die erste Spreizbacke 45 aus, und der zweite Längssteg 55 übt eine Kraft auf die zweite Spreizbacke 46 aus. Dadurch werden die beiden Spreizbacken 45, 46 entgegen der Federkraft der Spreizfeder 49 gegen das Halteelement 33 gedrückt. Je weiter das Halteelement 33 in die Aussparung 57 eingeschoben wird, desto stärker werden die beiden Spreizbacken 45, 46 zusammengepresst.

In Fig. 8C sind die beiden Spreizbacken 45, 46 so weit zusammengepresst, dass die Breite der zusammengedrückten Spreizbacken 45, 46 der Breite der Längsaussparung 57 entspricht. Die Spreizbacken 45, 46 werden also so stark zusammengepresst, dass der Fuß des Halteelements 33 durch die Längsaussparung 57 hindurch in das Innere der Hohlprofilschiene 50 eingeschoben werden kann.

Sobald die beiden Spreizbacken 45, 46 die Längsstege 53, 55 passiert haben, drücken die Längsstege 53, 55 nicht länger gegen die Spreizbacken 45, 46. Der Druck, den die Längsstege 53, 55 auf die Spreizbacken 45, 46 ausgeübt haben, fällt plötzlich weg. Daher werden die beiden Spreizbacken 45, 46 nicht länger durch die Längsstege 53, 55 gegen das Halteelement 33 gedrückt

Wie in Fig. 8D gezeigt ist, werden die beiden Spreizbacken 45, 46 nach dem Passieren der Längsaussparung 57 durch die Federkraft der Spreizfeder 49 im Inneren der Hohlprofilschiene 50 wieder aufgespreizt, so dass sie wieder seitlich vom Halteelement 33 abstehen. Im aufgespreizten Zustand ist die Breite der Spreizbacken 45, 46 wieder größer als die Breite der Längsaussparung 57. Insofern wird das erfindungsgemäße Befestigungselement nach dem Einschieben in die Längsaussparung 57 im Inneren der Hohlprofilschiene 50 durch die aufgespreizten Klemmbacken 45, 46 arretiert.

Wenn die in den Fig. 5 und 6 gezeigte Festklemmplatte 41 mittels der Gewindeschraube 35 auf die Rahmenabschnitte der benachbarten Solarmodule aufgeschraubt wird, dann wird das Halteelement 33 beim Festschrauben der Gewindeschraube 35 nach oben gezogen. Dies ist in Fig. 8E dargestellt. Dabei wird die beim Festschrauben der Gewindeschraube 35 auf das Halteelement 33 ausgeübte Zugkraft durch den Pfeil 58 repräsentiert. Durch die Zugkraft nach oben werden die Spreizbacken 45, 46 gegen die Unterseite der Längsstege 53, 55 gepresst, und dadurch wird das Halteelement 33 an der jeweiligen Stelle der Hohlprofilschiene 50 festgeklemmt. Auf diese Weise können die Rahmen der Solarmodule stabil und belastbar an der Hohlprofilschiene 50 befestigt werden.

Entsprechend einer vorteilhaften Ausführungsform der Erfindung sind an die Oberseiten der Spreizbacken 45, 46 Keilfortsätze 59 angeformt, und an der Unterseite der Längsstege 53, 55 sind Keilfortsätze 60 angeformt, die als Gegenstücke zu den Keilfortsätzen 59 ausgebildet sind. Wenn die Spreizbacken 45, 46 infolge der nach oben wirkenden Zugkraft von unten gegen die Längsstege 53, 55 gedrückt werden, dann sind die Keilfortsätze 59 in Eingriff mit den Keilfortsätzen 60, wie dies in Fig. 8E gezeigt ist. Durch diese Verkeilung zwischen den Keilfortsätzen 59 und 60 wird eine bessere und genauere Arretierung des Halteelements 33 in der Hohlprofilschiene 50 erzielt. Insbesondere verhindern die in Eingriff stehenden Keilfortsätze 59, 60, dass das Halteelement 33 innerhalb der Hohlprofilschiene 50 seitlich verrutschen kann. Die Positioniergenauigkeit des erfindungsgemäßen Befestigungselements wird dadurch verbessert.

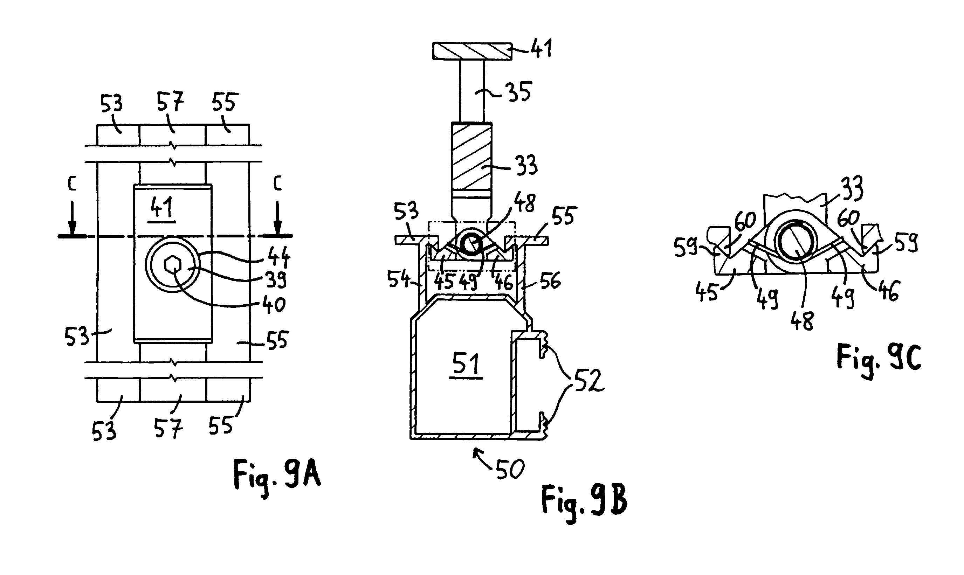

In Fig. 9A ist das erfindungsgemäße Befestigungselement zusammen mit der Hohlprofilschiene in Draufsicht gezeigt. Zu erkennen sind die Oberseite der Festklemmplatte 41 mit dem Senkkopf 39 und dem Innensechskant 40 der Gewindeschraube 35, die Längsstege 53, 55, der Hohlprofilschiene 50 sowie die Längsaussparung 57 der Hohlprofilschiene 50. Außerdem ist eine Schnittlinie C-C eingezeichnet.

Der zu der Schnittlinie C-C gehörige Längsschnitt ist in Fig. 9B dargestellt, wobei zur Beschreibung der einzelnen Teile auf die bisherige Beschreibung verwiesen wird.

In Fig. 9C ist der in Fig. 9B gestrichelt eingezeichnete Bereich noch einmal als Ausschnittsvergrößerung gezeigt. In Fig. 9C ist insbesondere die Position der Spreizfeder 49 gut zu erkennen, welche die beiden Spreizbacken 45, 46 in eine Position drückt, in der sie von dem Halteelement 33 seitlich abstehen. In Fig. 9C ist insbesondere auch zu erkennen, wie die Keilfortsätze 59 der Spreizbacken 45, 46 in die entgegengesetzt geformten Keilfortsätze 60 an der Unterseite der Längsstege 53, 55 eingreifen.

## Patentansprüche

1. Befestigungselement für Rahmenabschnitte von Solarmodulen, welches aufweist:
ein auf oder in einer Montageschiene (24) befestigbares Halteelement (1);
ein Festklemmteil (9), das an seiner Oberseite ein wannenförmiges Lager (14) zur Aufnahme eines Nutensteins (15) aufweist,
wobei sich das erste Ende (11) des Festklemmteils (9) unmittelbar oder mittelbar auf der Montageschiene (24) abstützt,
wobei das zweite Ende (12) des Festklemmteils (9) dazu ausgebildet ist, den Rahmenabschnitt (28) gegen die Montageschiene (24) zu drücken;
einen Nutenstein (15), der in dem wannenförmigen Lager (14) beweglich gelagert ist;
eine Gewindeschraube (2), die durch entsprechende Aussparungen (17, 18) im Nutenstein (15) und im wannenförmigen Lager (14) des Festklemmteils (9) hindurch in das Halteelement (1) eingeschraubt ist und eine Verbindung zwischen dem Festklemmteil (9) und dem Halteelement (1) herstellt,
wobei das Festklemmteil (9) dazu ausgebildet ist, beim Festschrauben der Gewindeschraube (2) mit seinem zweiten Ende (12) den Rahmenabschnitt (28) des Solarmoduls gegen die Montageschiene (24) zu drücken und den Rahmenabschnitt (28) auf diese Weise zu befestigen.

2. Befestigungselement nach Anspruch 1, **dadurch gekennzeichnet, dass** es sich bei dem Rahmenabschnitt des Solarmoduls um einen außen liegenden Rahmenabschnitt des Solarmoduls handelt.

3. Befestigungselement nach Anspruch 1 oder Anspruch 2, **dadurch gekennzeichnet, dass** das Festklemmteil dazu ausgelegt ist, Rahmenabschnitte von unterschiedlicher Bauhöhe an der Montageschiene zu befestigen.

4. Befestigungselement nach einem der Ansprüche 1 bis 3, **dadurch gekennzeichnet, dass** durch den in dem wannenförmigen Lager beweglich gelagerten Nutenstein eine Anpassung an eine jeweilige Neigung des Festklemmteils erfolgt.

5. Befestigungselement nach Anspruch 4, **dadurch gekennzeichnet, dass** der Nutenstein und das wannenförmige Lager dazu ausgelegt sind, die Gewindeschraube unabhängig von einer jeweiligen Neigung des Festklemmteils in einer vordefinierten Position zu halten.

6. Befestigungselement nach Anspruch 4 oder Anspruch 5, **dadurch gekennzeichnet, dass** die Neigung des Festklemmteils in erster Linie durch eine Bauhöhe des zu befestigenden Rahmenabschnitts festgelegt ist.

7. Befestigungselement nach einem der Ansprüche 1 bis 6, **gekennzeichnet durch** mindestens eines der folgenden Merkmale:
der Nutenstein weist eine konvex gewölbte Unterseite auf, die auf dem wannenförmigen Lager aufliegt;
das wannenförmige Lager weist ein Langloch auf, **durch** das hindurch sich die Schraube erstreckt;
das Halteelement umfasst eine Gewindemutter oder eine Gewindeplatte, die ein Innengewinde zum Einschrauben der Gewindeschraube bereitstellt;
das Festklemmteil ist als bogenförmiges Festklemmteil ausgebildet;
die Montageschiene ist als Profilschiene ausgebildet;
die Montageschiene ist als Hohlprofilschiene ausgebildet.

8. Befestigungselement nach einem der Ansprüche 1 bis 7, **dadurch gekennzeichnet, dass** das zweite Ende des Festklemmteils unmittelbar auf dem Rahmenabschnitt aufliegt.

9. Befestigungselement nach einem der Ansprüche 1 bis 7, **gekennzeichnet durch** ein Kantenauflageelement, das auf der oberen Kante des Rahmenabschnitts aufliegt und dazu ausgelegt ist, den Rahmenabschnitt gegen die Montageschiene zu drücken.

10. Befestigungselement nach einem der Ansprüche 1 bis 9, **dadurch gekennzeichnet, dass** die Montageschiene als Hohlprofilschiene ausgebildet ist, welche eine Längsaussparung zur Halterung des Halteelements umfasst, wobei das Halteelement dazu ausgelegt ist, in der Längsaussparung der Hohlprofilschiene gehaltert zu werden.

11. Befestigungselement nach einem der Ansprüche 1 bis 10, **dadurch gekennzeichnet, dass** das Befestigungselement aufweist:
eine oder mehrere am Fuß des Halteelements schwenkbar angebrachte Spreizbacken;
eine Spreizfeder, wobei die Spreizbacken durch die Spreizfeder derart aufgespreizt werden, dass sie vom Halteelement seitlich abstehen,
wobei die Spreizbacken entgegen der Federkraft der Spreizfeder gegen das Halteelement drückbar sind,
wobei die Spreizbacken dazu ausgelegt sind, in eine Längsaussparung einer Hohlprofilschiene eingeschoben zu werden, und
wobei im Inneren der Hohlprofilschiene die aufgespreizten Spreizbacken das Halteelement arretieren, wenn eine Zugkraft auf das Halteelement ausgeübt wird.

12. Befestigungselement nach Anspruch 11, **dadurch gekennzeichnet, dass** die Spreizbacken beim Einschieben in die Längsaussparung entgegen der Federkraft der Spreizfeder gegen das Halteelement gedrückt werden und im zusammengedrückten Zustand in die Längsaussparung einschiebbar sind,
wobei sich die Spreizbacken nach Passieren der Längsaussparung der Hohlprofilschiene im Inneren der Hohlprofilschiene infolge der Federkraft der Spreizfeder aufspreizen und vom Halteelement seitlich abstehen, und
wobei die aufgespreizten Spreizbacken das Halteelement innerhalb der Hohlprofilschiene arretieren, wenn eine Zugkraft auf das Halteelement ausgeübt wird.

13. Befestigungselement nach Anspruch 11 oder Anspruch 12, **dadurch gekennzeichnet, dass** die Spreizbacken im aufgespreizten Zustand breiter sind als die Breite der Längsaussparung der Hohlprofilschiene.

14. Befestigungssystem für Solarmodule, welches aufweist:
ein Befestigungselement nach einem der Ansprüche 1 bis 13;
eine Montageschiene (24), auf oder in der das Befestigungselement gehaltert ist.

15. Befestigungssystem für Solarmodule, welches aufweist:
eine Hohlprofilschiene (50) mit einer Längsaussparung (57);
ein Befestigungselement mit einem Halteelement (33),
wobei das Halteelement (33) dazu ausgelegt ist, in der Längsaussparung (57) der Hohlprofilschiene (50) gehaltert zu werden,
wobei das Halteelement (33) eine oder mehrere am Fuß des Halteelements schwenkbar angebrachte Spreizbacken (45, 46) sowie eine Spreizfeder (49) aufweist, wobei die Spreizbacken (45, 46) durch die Spreizfeder (49) derart aufgespreizt werden, dass sie vom Halteelement (33) seitlich abstehen,
wobei die Spreizbacken (45, 46) entgegen der Federkraft der Spreizfeder (49) gegen das Halteelement (33) drückbar sind,
wobei die Spreizbacken (45, 46) dazu ausgelegt sind, in die Längsaussparung (57) der Hohlprofilschiene (50) eingeschoben zu werden, und
wobei die aufgespreizten Spreizbacken (45, 46) das Halteelement (33) im Inneren der Hohlprofilschiene (50) arretieren, wenn eine Zugkraft auf das Halteelement (33) ausgeübt wird.

16. Befestigungssystem nach Anspruch 15, **dadurch gekennzeichnet, dass** die Spreizbacken beim Einschieben in die Längsaussparung entgegen der Federkraft der Spreizfeder gegen das Halteelement gedrückt werden und im zusammengedrückten Zustand in die Längsaussparung einschiebbar sind,
wobei sich die Spreizbacken nach Passieren der Längsaussparung der Hohlprofilschiene im Inneren der Hohlprofilschiene infolge der Federkraft der Spreizfeder aufspreizen und vom Halteelement seitlich abstehen, und
wobei die aufgespreizten Spreizbacken das Halteelement innerhalb der Hohlprofilschiene arretieren, wenn eine Zugkraft auf das Halteelement ausgeübt wird.
